# FASCICULE DE BREVET EUROPEEN

(11) **EP 1 898 139 B1**
(45) Date de publication et mention de la délivrance du brevet: **22.04.2015**
(21) Numéro de dépôt: 07116074.1
(22) Date de dépôt: 11.09.2007
(51) Int. Cl.: F16L 37/12, F16L 37/14, F16L 37/38, F16L 41/02

(54) **Collecteur de distribution d'un fluide tel que de l'eau.**
Verteiler für eine Flüssigkeit wie Wasser
Distribution manifold for a fluid such as water.

(30) Priorité: 11.09.2006 FR 0607918
(43) Date de publication de la demande: 12.03.2008
(73) Titulaire: Watts Industries France, 84270 Vedene (FR)
(72) Inventeur: Menet, Georges, 73800, LES MARCHES (FR)
(74) Mandataire: Casalonga, Axel

(56) Documents cités:
- WO-A1-2005/106312
- DE-B3-102004 038 912
- GB-A- 2 386 402
- JP-U- 1 173 595

## Description

La présente invention concerne le domaine général de la plomberie, des installations sanitaires et des installations de distribution d'un fluide tel que de l'eau, et plus particulièrement le domaine des collecteurs de distribution qui permettent de réaliser des connexions multiples.

A l'heure actuelle, les collecteurs utilisés, parfois appelés aussi nourrices, généralement métalliques et obtenus par fonderie, matriçage ou soudage, comprennent un corps tubulaire et une multiplicité d'embouts latéraux de branchement pour la fixation par vissage de tuyaux. Il est donc nécessaire de disposer d'autant d'outils de fabrication que de collecteurs différents à fabriquer, en fonction des nombres différents d'embouts de branchement et des diamètres différents de ces derniers. De plus, les installateurs doivent disposer d'un stock correspondant de collecteurs différents.

Par ailleurs, le document GB-A-2 386 402 décrit l'état de la technique plus proche et montre des éléments de collecteur accouplés axialement, dont les parties mâles et femelles engagées les unes dans les autres sont maintenues par un organe de blocage radial en forme de fourchette dont les branches sont placées dans des rainures extérieures opposées de la partie femelle et engagées dans une rainure périphérique de la partie mâle entre des parties espacées du fond de chacune des rainures, les tuyaux étant montés par vissage sur leurs embouts de branchement. Les documents DE-A-202 19 782 et EP-A-1 698 821 décrivent des organes de blocage en forme de fourchettes.

La présente invention propose un perfectionnement aux collecteurs à éléments de collecteur accouplés axialement.

La présente invention a pour objet un collecteur de distribution d'un fluide tel que de l'eau, qui comprend au moins deux éléments de collecteur comprenant respectivement un conduit tubulaire présentant à ses extrémités une partie mâle et une partie femelle, respectivement cylindriques et complémentaires, et au moins un embout latéral de branchement relié intérieurement audit conduit, la partie mâle de l'un des éléments étant engagée axialement dans la partie femelle de l'autre élément, la partie femelle de chaque élément présentant une fente radiale et la partie mâle de chaque élément présentant une gorge annulaire extérieure, cette fente radiale et cette gorge étant adaptées pour recevoir radialement un organe de blocage axial qui se présente sous la forme d'un U dont la branche centrale s'engage dans la fente de la partie femelle et dans ladite gorge extérieure de la partie mâle et dont les branches opposées s'encastrent dans la gorge de la partie mâle, de part et d'autre.

Selon l'invention, ladite fente de la partie femelle est définie entre deux faces radiales opposées s'étendant dans des plans radiaux du conduit et deux faces diamétralement opposées s'étendant axialement et dont la distance entre les faces opposées est égale ou plus grande que le diamètre de la surface cylindrique de la partie femelle et ladite fente comprend une ouverture traversant sa paroi et des rainures opposées, la branche centrale de l'organe de blocage axial s'engageant dans ladite ouverture et les branches opposées de l'organe de blocage axial s'engageant dans lesdites rainures opposées et longeant lesdites faces opposées de ces rainures.

Selon l'invention, la partie femelle présente au moins une traverse de liaison qui traverse axialement ladite ouverture et qui est située à distance et à l'intérieur de la surface périphérique de la partie femelle de façon à former un évidement extérieur, la branche centrale de l'organe de blocage axial s'engageant dans cet évidement extérieur et la surface extérieure périphérique de cette partie centrale affleurant approximativement la surface périphérique de la partie femelle.

Selon l'invention, la branche centrale de l'organe de blocage axial peut présenter un évidement intérieur dans lequel s'engage ladite traverse de liaison.

Selon l'invention, la branche centrale de l'organe de blocage axial peut s'engager dans ladite gorge extérieure de la partie mâle.

Selon l'invention, la gorge extérieure de la partie mâle peut être annulaire.

Selon l'invention, l'organe de blocage et la partie mâle et/ou la partie femelle peuvent comprendre des moyens complémentaires de maintien radial en position de blocage.

Selon l'invention, ladite fente de la partie femelle peut comprendre des passages dans lesquels s'étendent des parties d'extrémité desdites branches opposées de l'organe de blocage.

Selon l'invention, les parties d'extrémité desdites branches opposées de l'organe de blocage peuvent être munies d'un ergot de maintien en saillie coopérant avec un bord d'extrémité extérieur du passage correspondant.

Selon l'invention, les parties d'extrémité desdites branches opposées de l'organe de blocage sont munies d'un ergot de maintien en saillie coopérant avec un appui ménagé dans le passage correspondant.

Selon l'invention, les bords d'extrémité des parties d'extrémité desdites branches opposées de l'organe de blocage peuvent affleurer la surface périphérique de la partie femelle.

Selon l'invention, la surface extérieure de la partie centrale de l'organe de blocage peut affleurer approximativement la surface extérieure de la partie femelle.

Selon l'invention, au moins un joint d'étanchéité annulaire peut être interposé entre la partie mâle et la partie femelle desdits éléments, entre l'extrémité et la gorge de la partie mâle.

Selon l'invention, ledit joint d'étanchéité annulaire peut être disposé dans une gorge annulaire de ladite partie mâle.

Selon l'invention, la distance entre les axes des embouts latéraux de branchement, disposés parallèlement, de deux éléments de collecteur adjacents peut être comprise entre deux et cinq fois le diamètre des embouts de branchement.

Selon l'invention, le collecteur peut comprendre un élément complémentaire de collecteur constitué par un bouchon femelle présentant une partie d'extrémité femelle identique à celle desdits éléments.

Selon l'invention, le collecteur peut comprendre un élément complémentaire de collecteur constitué par un bouchon mâle présentant une partie d'extrémité mâle identique à celle desdits éléments.

Selon l'invention, ledit bouchon mâle peut être muni d'un clapet d'obturation guidé axialement dans la partie femelle, lesdits éléments présentant un siège de clapet adapté pour recevoir en appui ledit clapet d'obturation lorsque ce dernier est déplacé axialement par rotation dudit bouchon mâle.

Selon l'invention, chaque élément de collecteur peut présenter au moins un cran d'indexation angulaire, complémentaire d'au moins un cran d'indexation angulaire des autres éléments de collecteur.

Selon l'invention, chaque élément de collecteur peut présenter des faces radiales opposées présentant lesdits crans d'indexation angulaire.

Selon l'invention, chacun desdits éléments de collecteur peut comprendre un épaulement intérieur annulaire tourné vers ladite partie femelle et constituant un siège de clapet.

Selon l'invention, chacun desdits éléments peut comprendre, dans sa partie femelle, un moyen de guidage axial d'un clapet.

Selon l'invention, ledit moyen de guidage de clapet peut être constitué par au moins un méplat s'étendant axialement.

Selon l'invention, les embouts de branchement peuvent être adaptés pour être engagés dans des parties d'extrémité de tuyaux, maintenues sur ces embouts par des bagues extérieures serties les entourant, la distance entre les axes des embouts latéraux de branchement, disposés parallèlement, de deux éléments de collecteur adjacents étant comprise entre deux et cinq fois le diamètre des embouts de branchement.

Des modes particuliers de réalisation de la présente invention vont maintenant être décrits à titre d'exemples non limitatifs et illustrés par le dessin, sur lequel :
- La figure 1 représente une coupe longitudinale d'un collecteur de distribution d'eau selon l'invention ;
- La figure 2 représente une coupe transversale selon II-II du collecteur de la figure 1 ;
- La figure 3 représente une vue en perspective avec un arrachement d'une extrémité d'un collecteur ;
- La figure 4 représente une coupe longitudinale de la vue de la figure 3 ;
- La figure 5 représente une vue en perspective d'un élément de collecteur ;
- La figure 6 représente une vue en perspective opposée d'un élément de collecteur ;
- Les figures 7 et 8 représentent des coupes transversales de variantes de réalisation ;
- La figure 9 représente une coupe longitudinale d'une variante de réalisation ;
- Et les figures 10 à 14 représentent des différentes étapes de montage d'une installation.

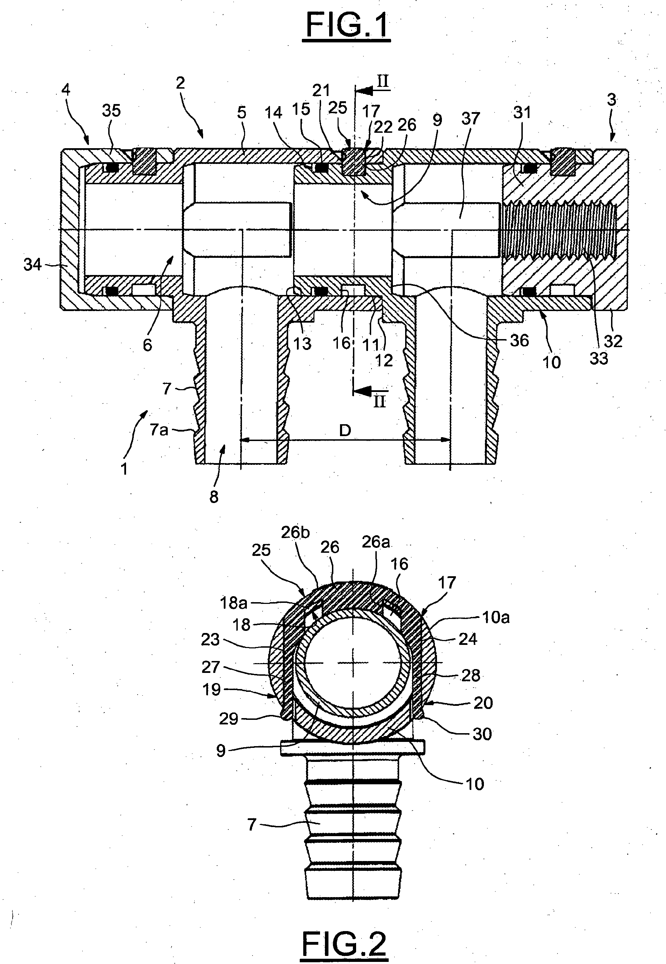

Le collecteur 1 représenté sur les figures 1 à 6 comprend deux éléments de collecteur 2 accouplés axialement, un élément complémentaire de collecteur constitué par un bouchon mâle d'extrémité 3 et un autre élément complémentaire de collecteur constitué par un bouchon femelle d'extrémité 4.

Chaque élément de collecteur 2 comprend un conduit tubulaire 5 définissant un canal axial 6 et un embout tubulaire latéral 7 définissant un canal radial 8 communiquant avec le canal axial 6. dans l'exemple, l'embout latéral 7 est disposé perpendiculairement au conduit tubulaire 5. L'embout latéral 7, muni de crans périphériques 7a, est destiné à être introduit dans l'extrémité d'un tuyau, cette extrémité pouvant être maintenue sur l'embout latéral 7 par exemple par sertissage d'une bague.

Le conduit tubulaire 5 comprend, à ses extrémités opposées, une partie mâle cylindrique 9 et une partie femelle cylindrique 10, situées de part et d'autre de l'embout latéral 7.

La partie mâle 9 présente une surface cylindrique extérieure 11, limitée axialement par un épaulement extérieur annulaire 12 du conduit 5. La partie femelle 10 présente une surface cylindrique intérieure 13 constituant une partie du canal axial 6.

La partie mâle 9 présente une gorge annulaire périphérique 14 adaptée pour recevoir un joint annulaire d'étanchéité 15 et, entre cette gorge 14 et l'épaulement 12, une gorge annulaire périphérique 16 de section rectangulaire.

La partie femelle 10 présente une fente radiale 17 qui comprend une ouverture 18 traversant sa paroi et deux passages 19 et 20 opposés à cette ouverture et traversant sa paroi, qui débouchent dans le canal axial 6. Cette ouverture 18 et ces passages 19 et 20 sont définis entre deux faces radiales opposées 21 et 22 s'étendant dans des plans radiaux et deux faces diamétralement opposées et parallèles 23 et 24 s'étendant axialement. L'ouverture traversante 18 est située sur le côté opposé à l'embout de branchement 7.

La distance entre les faces radiales opposées 21 et 22 est égale à la largeur de la gorge annulaire 16. La distance entre les faces opposées 23 et 24 est égale ou légèrement plus grande que le diamètre de la surface cylindrique 13 de la partie femelle 10 de façon à définir des rainures diamétralement opposées.

Lorsque la partie mâle 9 d'un élément de collecteur 2 est engagée dans la partie femelle 10 d'un autre élément de collecteur 2, la fente 17 de la partie femelle est axialement en correspondance avec la gorge annulaire 16 de la partie mâle 9.

Les faces radiales opposées 21 et 22 de la fente radiale 17 sont reliées par deux traverses de liaison et de renforcement 18a qui traversent axialement l'ouverture 18 de cette fente et qui sont situées à distance et à l'intérieur de la surface périphérique cylindrique 10a de la partie femelle 10 de façon à former extérieurement des évidements extérieurs 18b au-dessus de ces traverses de liaison 18a.

Pour solidariser les deux éléments de collecteur ainsi accouplés, on engage dans la fente radiale 17 de la partie femelle 10, radialement, un organe de blocage axial 25. Cet organe de blocage 25 épouse la forme de la fente 17 d'un élément de collecteur et s'engage à cheval sur l'élément de collecteur qui lui est accouplé et dans la gorge annulaire 16 de ce dernier.

L'organe de blocage 25 est en forme de U à faces opposées parallèles et comprend une partie centrale arquée 26 qui s'encastre dans l'ouverture 18 de la partie femelle 10 et dans la partie adjacente de la gorge annulaire 16 de la partie mâle 9 et comprend deux branches 27 et 28 qui longent les faces opposées 23 et 24 et s'encastrent avec un jeu radial dans les parties diamétralement opposées de la gorge annulaire 16.

Les parties d'extrémité de ces branches 27 et 28 s'étendent au travers des passages 19 et 20, en laissant un jeu intérieur, et présentent des ergots extérieurs en saillie 29 et 30 qui viennent en arrière des bords extérieurs des passages 19 et 20.

La partie centrale arquée 26 présente, intérieurement, des évidements 26a dans lesquelles s'engagent les traverses de liaison 18a, de telle sorte que cette partie centrale arquée 26 s'engage dans la gorge annulaire 16 de la partie mâle 9 de part et d'autre des traverses de liaison 18a.

En outre, la surface extérieure 26b, cylindrique, de la partie centrale arquée 26 affleure approximativement la surface périphérique cylindrique 10a de la partie femelle 10.

Pour extraire l'organe de blocage 25 en vue de désaccoupler les éléments 2, on rapproche les parties d'extrémité de ses branches 27 et 28 qui se déforment élastiquement l'une vers l'autre, de façon à faire pénétrer les ergots 29 et 30 dans les passages 19 et 20, on repousse ces branches et on retire l'organe de blocage en prenant sa partie centrale 26.

Le bouchon mâle d'extrémité 3 est cylindrique et comprend une partie mâle d'extrémité 31 conformée extérieurement comme la partie mâle d'extrémité 9 des éléments de collecteur 2 de façon à lui être accouplée et à lui être solidarisée par un organe de blocage 25. Le bouchon mâle d'extrémité 3 présente un épaulement périphérique 32 adapté pour venir dans le prolongement de la paroi de la partie femelle 10 des éléments de collecteur 2. Le bouchon mâle d'extrémité 3 présente en outre un trou axial taraudé borgne 33, ménagé du côté de sa partie mâle d'extrémité 31.

Le bouchon femelle d'extrémité 4 est en forme de cuvette et comprend, à partir d'un flanc radial d'extrémité 34, une partie femelle 35 conformée comme la partie femelle d'extrémité 10 des éléments de collecteur 2 de façon à lui être accouplée et à lui être solidarisée par un organe de blocage 25.

Chaque élément de collecteur 2 présente, dans son canal axial 6, un siège de clapet 36 constitué par un épaulement annulaire intérieur radiale tourné vers sa partie femelle d'extrémité 10 et situé de l'autre côté du canal radial 8 de son embout tubulaire latéral 7, c'est-à-dire du côté de sa partie mâle 9.

Entre l'épaulement intérieur 36 et la partie femelle d'extrémité 10, le conduit présente, dans le canal axial 6, deux méplats latéraux 37 diamétralement opposés.

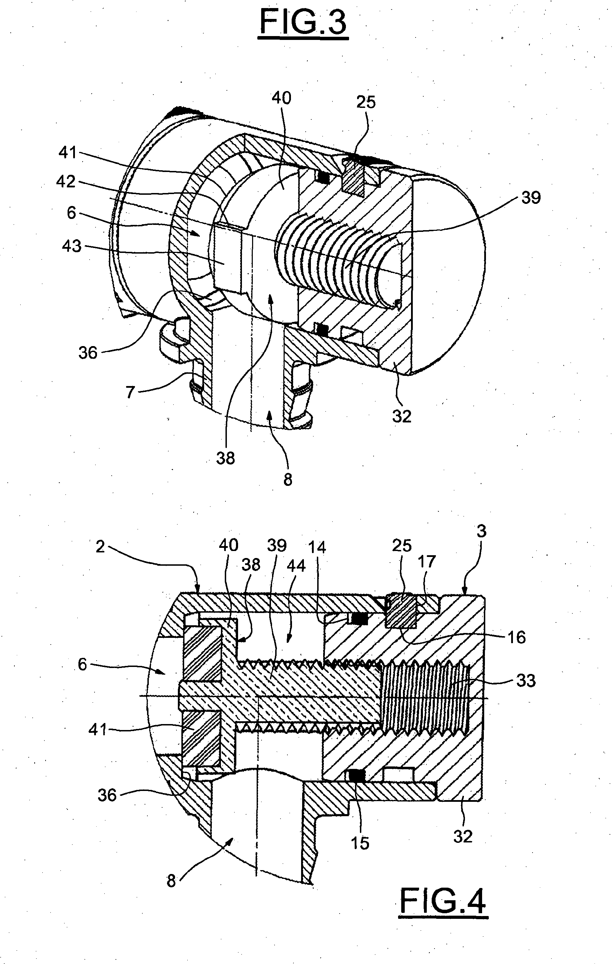

Comme le montrent les figures 3 et 4, le bouchon mâle d'extrémité 3, accouplé à un élément de collecteur 2, peut porter un clapet d'obturation 38 comprenant une partie filetée 39 vissée dans le trou taraudé 33 et un disque 40 muni d'un disque-joint 41 sur sa face opposée à sa partie filetée 39 et faisant face au siège de clapet 36. Le disque 40 présente deux bossages latéraux 42 opposés à faces latérales plates 43 placées de façon adjacente aux méplats 37.

Lorsqu'un opérateur tourne dans un sens ou dans l'autre le bouchon mâle d'extrémité 3 par rapport à l'élément de collecteur 2, le clapet 38, maintenu en rotation par les faces plates 43 qui coopèrent avec les méplats 37, se déplace axialement dans un sens ou dans l'autre. Lorsque le clapet 38 est éloigné du siège de clapet 36, le canal axial 6 et le canal radial 8 de l'élément de collecteur 2 communiquent. Lorsque le clapet 38 est en appui sur le siège de clapet 36 par l'intermédiaire du disque-joint 41, la communication entre le canal axial 6 et le canal radial 8 de l'élément de collecteur 2 est coupée.

Un élément de collecteur 2 muni d'un bouchon mâle d'extrémité 3 portant un clapet 38 constitue donc un robinet de collecteur 44.

I1 ressort de ce qui précède que l'on peut fabriquer des séries de composants constitués d'éléments de collecteur 2, de joints 15, de bouchons mâle d'extrémité 3, de bouchons femelle d'extrémité 4, d'organes de blocage 25 et de clapets 38. On peut aussi disposer de séries d'éléments de collecteur 2 uniquement différentes par leurs embouts latéraux de branchement en vue de brancher des tuyaux de diamètres différents.

Avantageusement, hormis les joints 15 et les disques-joints 41 des clapets 38, de tels composants peuvent avantageusement être en une matière synthétique éventuellement chargée et fabriqués à l'aide de machines d'injection.

Disposant de telles séries de composants, on peut fabriquer des collecteurs à la demande, c'est-à-dire des collecteurs présentant autant d'éléments de collecteur 2 que nécessaire pour disposer d'autant d'embouts de branchement 7 que nécessaire pour une installation particulière de distribution d'eau.

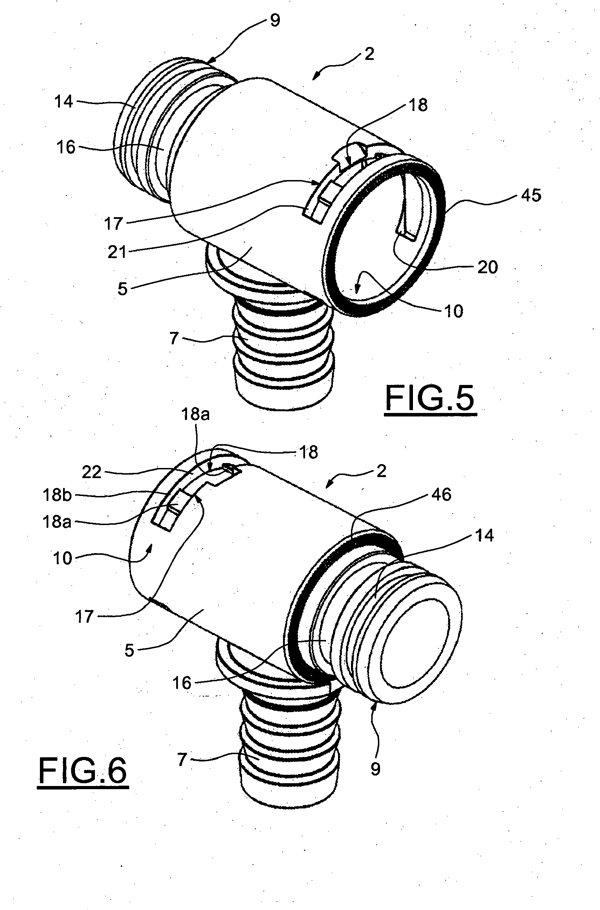

Selon la variante représentée sur les figures 5 et 6, les faces radiales d'extrémité des éléments 2, venant en vis-à-vis les unes des autres, ainsi que les faces radiales d'extrémité correspondantes des bouchons 3 et 4, présentent des crans complémentaires d'indexation angulaires constitués d'une part par des rainures radiales 45 et d'autre part par des nervures radiales 46, disposées angulairement de façon à pénétrer axialement les unes dans les autres.

Avantageusement, un organe de blocage 25 ne peut être mis en place que si les rainures radiales 45 et les nervures radiales 46 correspondantes, d'indexation, de deux éléments de collecteur 2, 3 ou 4 sont accouplées.

Selon une variante, on pourrait prévoir uniquement des paires de crans 45 et 45 diamétralement opposés pour ne pouvoir placer deux éléments de collecteur successifs 2 que dans une position telle que leurs embouts de branchement 7 soient parallèles.

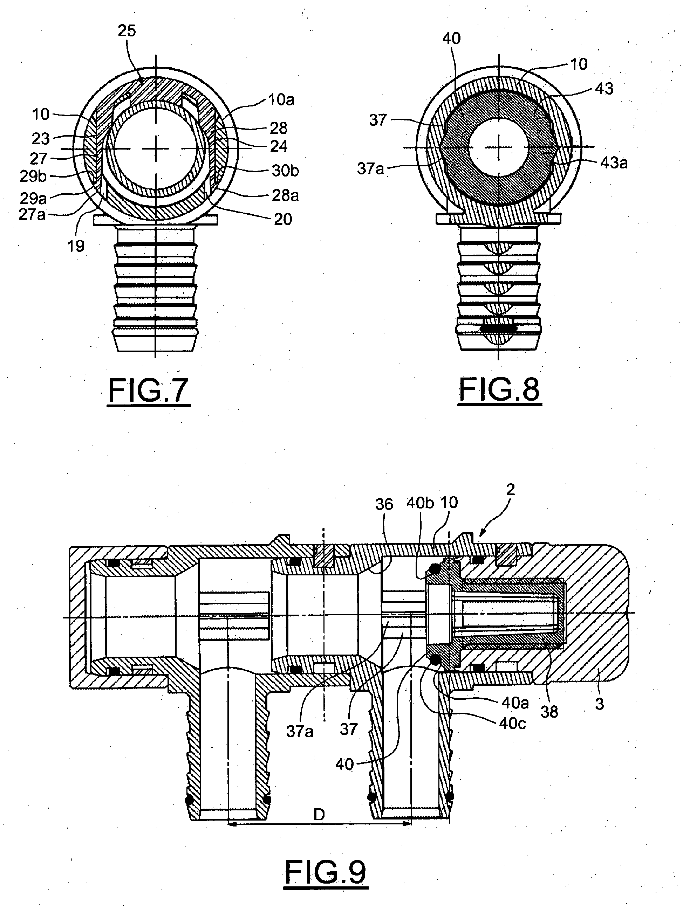

En se reportant à la figure 7, on a représenté une variante de l'organe de blocage 25, selon laquelle les extrémités de ses branches 27 et 28 sont présentent des ergots ou crochets extérieurs 29a et 30a venant en arrière d'appuis 29b et 30b ménagés dans les passages 19 et 20, les bords d'extrémité 27a et 28a des parties d'extrémité des branches opposées 27 et 28 affleurant la surface périphérique 10a de la partie femelle (10).

En se reportant aux figures 8 et 9, on a représenté une variante selon laquelle chaque élément de collecteur 2 présente un siège de clapet 36 constitué par un épaulement annulaire intérieur tronconique et selon laquelle le disque 40 du clapet d'obturation 38 porté par le bouchon mâle 3 présente une face frontale 40a également tronconique, qui présente une gorge annulaire 40b dans laquelle un joint annulaire 40c est inséré et est destiné à venir en appui sur le siège de clapet 36.

De plus, comme le montrent les figures 8 et 9, pour assurer le guidage axial du clapet d'obturation 38, les méplats opposés 37 de la partie femelle 10 comprennent présentent des gorges axiales 37a de sections radiales en forme de V et les méplats opposés 43 du disque 40 présentent des parties axiales en saillie 43a de sections radiales en forme de V engagées dans les gorges axiales 37a.

Comme le montrent les figures 3 et 4, le bouchon mâle d'extrémité 3, accouplé à un élément de collecteur 2, peut porter un clapet d'obturation 38 comprenant une partie filetée 39 vissée dans le trou taraudé 33 et un disque 40 muni d'un disque-joint 41 sur sa face opposée à sa partie filetée 39 et faisant face au siège de clapet 36. Le disque 40 présente deux bossages latéraux 42 opposés à faces latérales plates 43 placées de façon adjacente aux méplats 37.

D'une manière générale, les éléments de collecteur 2 sont dimensionnés de telle sorte que la distance D entre les axes des embouts latéraux de branchement 7, disposés parallèlement, de deux éléments de collecteur 2 accouplés adjacents soit comprise entre deux et cinq fois le diamètre des embouts de branchement.

Pour réaliser une installation comprenant plusieurs tuyaux, par exemple en PER (Polyéthylène Réticulé haute densité), sertis sur les embouts de branchement 7 de différents éléments de collecteur 2, on procède de la manière suivante.

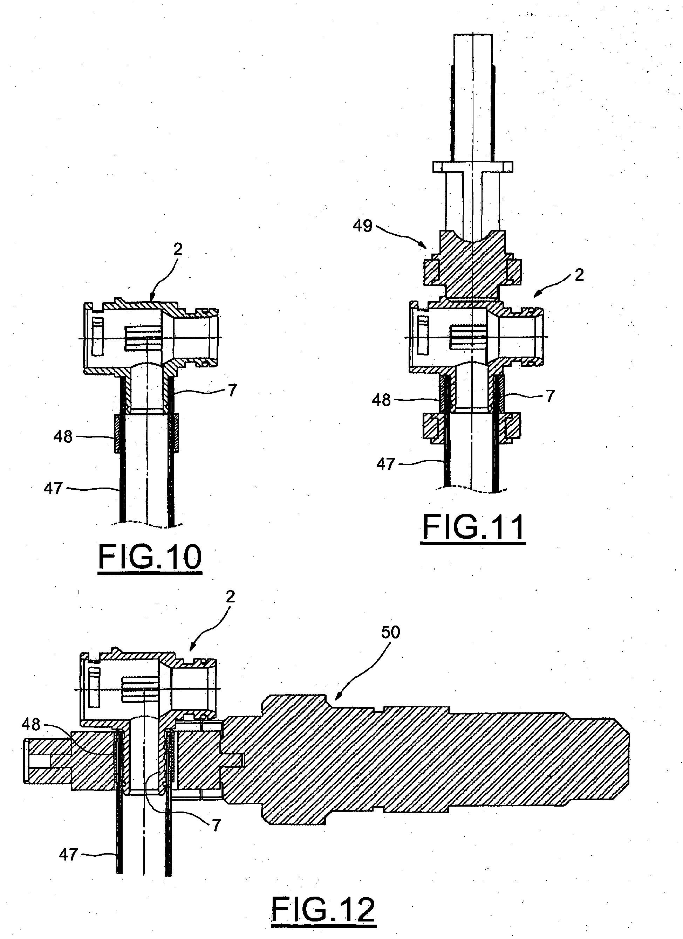

Dans une première étape, on connecte des éléments de collecteur 2, pris séparément et isolément, aux tuyaux 47 de l'installation en effectuant les opérations suivantes. Comme le montre la figure 10, on engage chaque embout de branchement 7 dans la partie d'extrémité de chaque tuyau 47 portant, à distance, une bague de sertissage 48. Puis, comme le montre la figure 11, à l'aide d'un outil de glissement 49, relativement volumineux compte tenu des efforts à fournir, on amène cette bague de sertissage 48 sur la partie d'extrémité du tuyau, autour de embout de branchement 7. Puis, comme le montre la figure 12, on sertit la bague de sertissage 48 par réduction de son diamètre, à l'aide d'un outil de sertissage 50 relativement volumineux compte tenu des efforts à fournir.

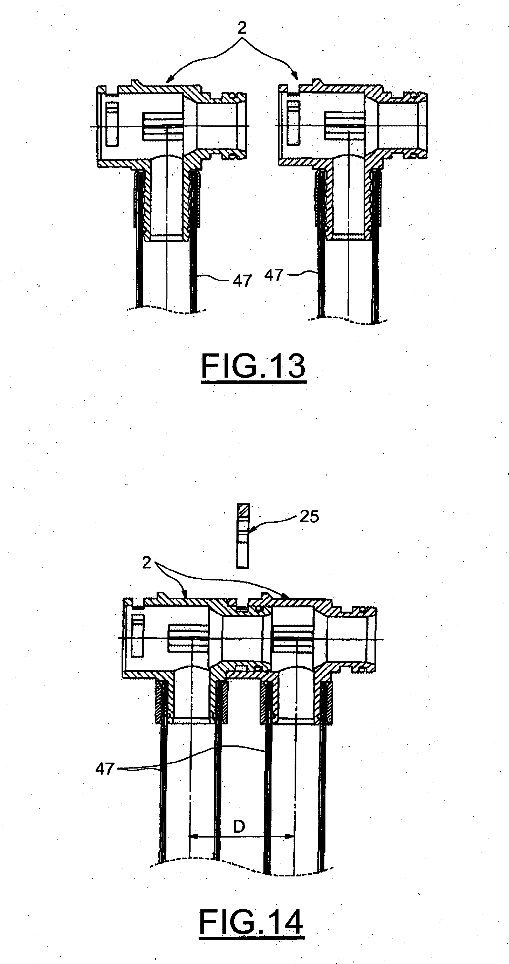

Comme le montre la figure 13, à la fin de la première étape, on dispose de différents éléments de collecteur 2 montés sur des tuyaux 47 et indépendants.

Dans une seconde étape, comme le montre la figure 14, on accouple les différents éléments de collecteur 2 axialement les uns à la suite des autres comme décrit précédemment et on les verrouille les uns par rapport aux autres à l'aide d'organes de blocage 25 comme décrit précédemment.

Puis, on accouple et on verrouille à l'aide d'organes de blocage 25 des bouchons mâle et femelle 3 et 4 sur les extrémités femelle et mâle de la rampe d'éléments de collecteur 2 ainsi formée.

Grâce aux dispositions structurelles et/ou dimensionnelles ci-dessus, on peut réaliser les opérations de montage par sertissage des tuyaux, avec les outils adaptés, tout en obtenant un collecteur assemblé de longueur réduite approximativement au minimun.

## Revendications

1. Collecteur de distribution d'un fluide tel que de l'eau, comprenant au moins deux éléments de collecteur (2) comprenant respectivement un conduit tubulaire (5) présentant à ses extrémités une partie mâle (9) et une partie femelle (10), respectivement cylindriques et complémentaires, et au moins un embout latéral de branchement (7) relié intérieurement audit conduit (5), la partie mâle (9) de l'un des éléments étant engagée axialement dans la partie femelle (10) de l'autre élément, la partie femelle (10) de, chaque élément présentant une fente radiale (17) et la partie mâle (9) de chaque élément présentant une gorge annulaire extérieure (16), cette fente radiale (17) et cette gorge (16) recevant radialement un organe de blocage axial (25) qui se présente sous la forme d'un U dont la branche centrale (26) s'engage dans la fente (17) de la partie femelle (10) et dans ladite gorge extérieure (16) de la partie mâle (9) et dont les branches opposées (27, 28) s'encastrent dans la gorge (16) de la partie mâle (9), de part et d'autre, **caractérisé par le fait que** ladite fente (17) de la partie femelle (10) est définie entre deux faces radiales opposées (21, 22) s'étendant dans des plans radiaux du conduit (5) et deux faces diamétralement opposées (23, 24) s'étendant axialement et la distance entres les faces diamétralement opposées (23, 24) est égale ou plus grande que le diamètre de la surface cylindrique (13) de la partie femelle (10) et que ladite fente (17) comprend une ouverture (18) traversant sa paroi et des rainures opposées, la branche centrale (26) de l'organe de blocage axial (25) s'engageant dans ladite ouverture (18) et les branches opposées (27, 28) de l'organe de blocage axial (25) s'engageant dans lesdites rainures opposées et longeant lesdites faces opposées (23, 24) de ces rainures, et **par le fait que** la partie femelle (10) présente au moins une traverse de liaison (18a) qui traverse axialement ladite ouverture (18) et qui est située à distance et à l'intérieur de la surface périphérique de la partie femelle de façon à former un évidement extérieur, la branche centrale (26) de l'organe de blocage axial (25) s'engageant dans cet évidement extérieur et la surface extérieure périphérique de cette partie centrale (26) affleurant approximativement la surface périphérique (10a) de la partie femelle (10).

2. Collecteur selon la revendication 1, **caractérisé par le fait que** la branche centrale (26) de l'organe de blocage axial (25) présente un évidement intérieur dans lequel s'engage ladite traverse de liaison (18a).

3. Collecteur selon l'une des revendications 1 et 2, **caractérisé par le fait que** la branche centrale (26) de l'organe de blocage axial (25) s'engage dans ladite gorge extérieure (16) de la partie mâle (9).

4. Collecteur selon l'une quelconque des revendications précédentes, **caractérisé par le fait que** la gorge extérieure (16) de la partie mâle (9) est annulaire.

5. Collecteur selon l'une quelconque des revendications précédentes, **caractérisé par le fait que** l'organe de blocage (25) et la partie mâle (9) et/ou la partie femelle (10) comprennent des moyens complémentaires de maintien radial (29) en position de blocage.

6. Collecteur selon l'une quelconque des revendications précédentes, **caractérisé par le fait que** ladite fente (17) de la partie femelle (10) comprend des passages (19, 20) dans lesquels s'étendent des parties d'extrémité desdites branchés opposées (27, 28) de l'organe de blocage (25).

7. Collecteur selon la revendication 6, **caractérisé par le fait que** les parties d'extrémité desdites branches opposées (27, 28) de l'organe de blocage (25) sont munies d'un ergot de maintien en saillie (29, 30) coopérant avec un bord d'extrémité extérieur du passage (19, 20) correspondant.

8. Collecteur selon la revendication 6, **caractérisé par le fait que** les parties d'extrémité desdites branches opposées (27, 28) de l'organe de blocage (25) sont munies d'un ergot de maintien en saillie (29a) coopérant avec un appui ménagé dans le passage (19, 20) correspondant.

9. Collecteur selon la revendication 8, **caractérisé par le fait que** les bords d'extrémité des parties d'extrémité desdites branches opposées (27, 28) de l'organe de blocage affleurent la surface périphérique (10a) de la partie femelle (10).

10. Collecteur selon l'une quelconque des revendications précédentes, **caractérisé par le fait que** la surface extérieure (26a) de la partie centrale (26) de l'organe de blocage (25) affleure approximativement la surface extérieure (10a) de la partie femelle (10).

11. Collecteur selon l'une quelconque des revendications précédentes, **caractérisé par le fait qu'**au moins un joint d'étanchéité annulaire (15) est interposé entre la partie mâle (9) et la partie femelle (10) desdits éléments, entre l'extrémité et la gorge (16) de la partie mâle.

12. Collecteur selon la revendication 11, **caractérisé par le fait que** ledit joint d'étanchéité annulaire (15) est disposé dans une gorge annulaire (14) de ladite partie mâle.

13. Collecteur selon l'une quelconque des revendications précédentes, **caractérisé par le fait que** la distance entre les axes des embouts latéraux de branchement (7), disposés parallèlement, de deux éléments de collecteur (2) adjacents est comprise entre deux et cinq fois le diamètre des embouts de branchement (7).

14. Collecteur selon l'une quelconque des revendications précédentes, **caractérisé par le fait qu'**il comprend un élément complémentaire de collecteur constitué par un bouchon femelle (4) présentant une partie d'extrémité femelle identique à celle desdits éléments.

15. Collecteur selon l'une quelconque des revendications précédentes, **caractérisé par le fait qu'**il comprend un élément complémentaire de collecteur constitué par un bouchon mâle (3) présentant une partie d'extrémité mâle identique à celle desdits éléments.

16. Collecteur selon la revendication 15, **caractérisé par le fait que** ledit bouchon mâle est muni d'un clapet d'obturation (38) guidé axialement dans la partie femelle, lesdits éléments présentant un siège de clapet adapté pour recevoir en appui ledit clapet d'obturation lorsque ce dernier est déplacé axialement par rotation dudit bouchon mâle.

17. Collecteur selon l'une quelconque des revendications précédentes, **caractérisé par le fait que** chaque élément de collecteur présente au moins un cran (45) d'indexation angulaire, complémentaire d'au moins un cran (46) d'indexation angulaire des autres éléments de collecteur.

18. Collecteur selon la revendication 17, **caractérisé par le fait que** chaque élément de collecteur présente des faces radiales opposées présentant lesdits crans (45, 46) d'indexation angulaire.

19. Collecteur selon l'une quelconque des revendications 1 à 14, dans lequel chacun desdits éléments de collecteur comprend un épaulement intérieur annulaire (36) tourné vers ladite partie femelle et constituant un siège de clapet.

20. Collecteur selon la revendication 19, dans lequel chacun desdits éléments comprend, dans sa partie femelle, un moyen de guidage axial (37) d'un clapet.

21. Collecteur selon la revendication 20, **caractérisé par le fait que** ledit moyen de guidage de clapet est constitué par au moins un méplat (37) s'étendant axialement.

22. Collecteur selon l'une quelconque des revendications précédentes, dans lequel les embouts de branchement (7) sont adaptés pour être engagés dans des parties d'extrémité de tuyaux, maintenues sur ces embouts (7) par des bagues extérieures de sertissage les entourant.

## Patentansprüche

1. Verteiler für ein Fluid wie Wasser, umfassend mindestens zwei Verteilerelemente (2), die jeweils einen rohrförmigen Kanal (5) umfassen, der an seinen Enden einen männlichen Teil (9) und einen weiblichen Teil (10) aufweist, die jeweils zylindrisch und komplementär sind, sowie mindestens einen seitlichen Anschluss (7), der innen mit dem Kanal (5) verbunden ist, wobei der männliche Teil (9) des einen der Elemente axial im weiblichen Teil (10) des anderen Elements in Eingriff steht, wobei der weibliche Teil (10) jedes Elements einen radialen Schlitz (17) aufweist und der männliche Teil (9) jedes Elements eine ringförmige äußere Kehle (16) aufweist, wobei dieser radiale Schlitz (17) und diese Kehle (16) radial ein axiales Blockierglied (25) aufnehmen, das die Form eines U hat, dessen mittlerer Schenkel (26) den Schlitz (17) des weiblichen Teils (10) und die äußere Kehle (16) des männlichen Teils (9) in Eingriff nimmt und dessen gegenüberliegende Schenkel (27, 28) sich beiderseits in die Kehle (16) des männlichen Teils (9) einfügen, **dadurch gekennzeichnet, dass** der Schlitz (17) des weiblichen Teils (10) zwischen zwei gegenüberliegenden radialen Flächen (21, 22), die sich in radialen Ebenen des Kanals (5) erstrecken, und zwei diametral gegenüberliegenden Flächen (23, 24), die sich axial erstrecken, definiert ist und der Abstand zwischen den diametral gegenüberliegenden Flächen (23, 24) gleich dem oder größer als der Durchmesser der zylindrischen Fläche (13) des weiblichen Teils (10) ist, und dass der Schlitz (17) eine durch seine Wand gehende Öffnung (18) und gegenüberliegende Rillen hat, wobei der mittlere Schenkel (26) des axialen Blockierglieds (25) in der Öffnung (18) in Eingriff kommt und die gegenüberliegenden Schenkel (27, 28) des axialen Blockierglieds (25) in den gegenüberliegenden Rillen in Eingriff kommen und entlang den gegenüberliegenden Flächen (23, 24) dieser Rillen liegen, und dass der weibliche Teil (10) mindestens eine Verbindungsquerstrebe (18a) aufweist, die die Öffnung (18) axial durchquert und die von der Umfangsfläche des weiblichen Teils beabstandet und innerhalb davon angeordnet ist, so dass eine äußere Aussparung gebildet wird, wobei der mittlere Schenkel (26) des axialen Blockierglieds (25) in dieser äußeren Aussparung in Eingriff kommt und die äußere Umfangsfläche dieses mittleren Teils (26) die Umfangsfläche (10a) des weiblichen Teils (10) annähernd berührt.

2. Verteiler nach Anspruch 1, **dadurch gekennzeichnet, dass** der mittlere Schenkel (26) des axialen Blockierglieds (25) eine innere Aussparung aufweist, in der die Verbindungsquerstrebe (18a) in Eingriff kommt.

3. Verteiler nach einem der Ansprüche 1 und 2, **dadurch gekennzeichnet, dass** der mittlere Schenkel (26) des axialen Blockierglieds (25) in der äußeren Kehle (16) des männlichen Teils (9) in Eingriff kommt.

4. Verteiler nach einem der vorhergehenden Ansprüche, **dadurch gekennzeichnet, dass** die äußere Kehle (16) des männlichen Teils (9) ringförmig ist.

5. Verteiler nach einem der vorhergehenden Ansprüche, **dadurch gekennzeichnet, dass** das Blockierglied (25) und der männliche Teil (9) und/oder der weibliche Teil (10) komplementäre Mittel (29) zum radialen Halten in der Blockierposition umfassen.

6. Verteiler nach einem der vorhergehenden Ansprüche, **dadurch gekennzeichnet, dass** der Schlitz (17) des weiblichen Teils (10) Durchgänge (19, 20) umfasst, in denen sich Endteile der gegenüberliegenden Schenkel (27, 28) des Blockierglieds (25) erstrecken.

7. Verteiler nach Anspruch 6, **dadurch gekennzeichnet, dass** die Endteile der gegenüberliegenden Schenkel (27, 28) des Blockierglieds (25) mit einem Stift (29, 30) versehen sind, der sie in vorragender Stellung hält und mit einem äußeren Endrand des entsprechenden Durchgangs (19, 20) zusammenwirkt.

8. Verteiler nach Anspruch 6, **dadurch gekennzeichnet, dass** die Endteile der gegenüberliegenden Schenkel (27, 28) des Blockierglieds (25) mit einem Stift (29a) versehen sind, der sie in vorragender Stellung hält und mit einer Stütze zusammenwirkt, die im entsprechenden Durchgang (19, 20) ausgeführt ist.

9. Verteiler nach Anspruch 8, **dadurch gekennzeichnet, dass** die Endränder der Endteile der gegenüberliegenden Schenkel (27, 28) des Blockierglieds die Umfangsfläche (10a) des weiblichen Teils (10) leicht berühren.

10. Verteiler nach einem der vorhergehenden Ansprüche, **dadurch gekennzeichnet, dass** die äußere Fläche (26a) des mittleren Teils (26) des Blockierglieds (25) die äußere Fläche (10a) des weiblichen Teils (10) annähernd berührt.

11. Verteiler nach einem der vorhergehenden Ansprüche, **dadurch gekennzeichnet, dass** mindestens eine ringförmige Dichtung (15) zwischen dem männlichen Teil (9) und dem weiblichen Teil (10) der Elemente zwischen dem Ende und der Kehle (16) des männlichen Teils liegt.

12. Verteiler nach Anspruch 11, **dadurch gekennzeichnet, dass** die ringförmige Dichtung (15) in einer ringförmigen Kehle (14) des männlichen Teils angeordnet ist.

13. Verteiler nach einem der vorhergehenden Ansprüche, **dadurch gekennzeichnet, dass** der Abstand zwischen den Achsen der parallel angeordneten seitlichen Anschlüsse (7) von zwei benachbarten Verteilerelementen (2) das Zwei- bis Fünffache des Durchmessers der Anschlüsse (7) beträgt.

14. Verteiler nach einem der vorhergehenden Ansprüche, **dadurch gekennzeichnet, dass** er ein komplementäres Verteilerelement umfasst, das aus einem weiblichen Stopfen (4) besteht, der einen weiblichen Endteil aufweist, der mit dem der Elemente identisch ist.

15. Verteiler nach einem der vorhergehenden Ansprüche, **dadurch gekennzeichnet, dass** er ein komplementäres Verteilerelement umfasst, das aus einem männlichen Stopfen (3) besteht, der einen männlichen Endteil aufweist, der mit dem der Elemente identisch ist.

16. Verteiler nach Anspruch 15, **dadurch gekennzeichnet, dass** der männliche Stopfen mit einem Sperrventil (38) versehen ist, das axial im weiblichen Teil geführt ist, wobei die Elemente einen Ventilsitz aufweisen, der geeignet ist, das Sperrventil stützend aufzunehmen, wenn dieses durch Drehung des männlichen Stopfens axial verschoben wird.

17. Verteiler nach einem der vorhergehenden Ansprüche, **dadurch gekennzeichnet, dass** jedes Verteilerelement mindestens eine winkelförmige Indexierungsraste (45) aufweist, die zu mindestens einer winkelförmigen Indexierungsraste (46) der anderen Verteilerelemente komplementär ist.

18. Verteiler nach Anspruch 17, **dadurch gekennzeichnet, dass** jedes Verteilerelement gegenüberliegende radiale Flächen aufweist, die die winkelförmigen Indexierungsrasten (45, 46) aufweisen.

19. Verteiler nach einem der Ansprüche 1 bis 14, wobei jedes der Verteilerelemente eine ringförmige innere Schulter (36) umfasst, die dem weiblichen Teil zugewandt ist und einen Ventilsitz bildet.

20. Verteiler nach Anspruch 19, wobei jedes der Elemente in seinem weiblichen Teil ein Mittel (37) zur axialen Führung eines Ventils umfasst.

21. Verteiler nach Anspruch 20, **dadurch gekennzeichnet, dass** das Klappenführungsmittel aus mindestens einer sich axial erstreckenden Abplattung (37) besteht.

22. Verteiler nach einem der vorhergehenden Ansprüche, wobei die Anschlüsse (7) geeignet sind, in Rohrendteilen in Eingriff zu kommen, die durch sie umgebende Presshülsen an diesen Anschlüssen (7) gehalten werden.

## Claims

1. Distribution manifold for a fluid such as water, comprising at least two manifold elements (2) respectively comprising a tubular duct (5) having at its ends a male part (9) and a female part (10), which are respectively cylindrical and complementary, and at least one lateral connection end-piece (7) connected internally to the said duct (5), the male part (9) of one of the elements being engaged axially in the female part (10) of the other element, the female part (10) of each element having a radial slot (17) and the male part (9) of each element having an outer annular groove (16), this radial slot (17) and this groove (16) radially receiving an axial blocking member (25) which has the form of a U whose central branch (26) engages in the slot (17) of the female part (10) and in the said outer groove (16) of the male part (9) and whose opposed branches (27, 28) fit in the groove (16) of the male part (9), on either side, **characterized in that** the said slot (17) of the female part (10) is defined between two opposed radial faces (21, 22) extending in radial planes of the ducts (5) and two diametrically opposed faces (23, 24) extending axially and the distance between the diametrically opposed faces (23, 24) is equal to or greater than the diameter of the cylindrical surface (13) of the female part (10) and **in that** the said slot (17) comprises an opening (18) traversing its wall and opposed channels, the central branch (26) of the axial blocking member (25) engaging in the said opening (18) and the opposed branches (27, 28) of the axial blocking member (25) engaging in the said opposed channels and running along the said opposed faces (23, 24) of these channels, and **in that** the female part (10) has at least one connecting crosspiece (18a) which axially traverses the said opening (18) and which is situated at a distance from and inside the peripheral surface of the female part so as to form an outer recess, the central branch (26) of the axial blocking member (25) engaging in this outer recess and the peripheral outer surface of this central part (26) being approximately flush with the peripheral surface (10a) of the female part (10),

2. Manifold according to Claim 1, **characterized in that** the central branch (26) of the axial blocking member (25) has an inner recess in which the said connecting crosspiece (18a) engages.

3. Manifold according to either of Claims 1 and 2, **characterized in that** the central branch (26) of the axial blocking member (25) engages in the said outer groove (16) of the male part (9).

4. Manifold according to any one of the preceding claims, **characterized in that** the outer groove (16) of the male part (9) is annular.

5. Manifold according to any one of the preceding claims, **characterized in that** the blocking member (25) and the male part (9) and/or the female part (10) comprise complementary means (29) for radial retention in the blocking position.

6. Manifold according to any one of the preceding claims, **characterized in that** the said slot (17) of the female part (10) comprises passages (19, 20) in which extend end parts of the said opposed branches (27, 28) of the blocking member (25).

7. Manifold according to Claim 6, **characterized in that** the end parts of the said opposed branches (27, 28) of the blocking member (25) are provided with a projecting retaining lug (29, 30) cooperating with an outer end edge of the corresponding passage (19, 20).

8. Manifold according to Claim 6, **characterized in that** the end parts of the said opposed branches (27, 28) of the blocking member (25) are provided with a projecting retaining lug (29a) cooperating with a support formed in the corresponding passage (19, 20).

9. Manifold according to Claim 8, **characterized in that** the end edges of the end parts of the said opposed branches (27, 28) of the blocking member are flush with the peripheral surface (10a) of the female part (10).

10. Manifold according to any one of the preceding claims, **characterized in that** the outer surface (26a) of the central part (26) of the blocking member (25) is approximately flush with the outer surface (10a) of the female part (10).

11. Manifold according to any one of the preceding claims, **characterized in that** at least one annular seal (15) is interposed between the male part (9) and the female part (10) of the said elements, between the end and the groove (16) of the male part.

12. Manifold according to Claim 11, **characterized in that** the said annular seal (15) is arranged in an annular groove (14) of the said male part.

13. Manifold according to any one of the preceding claims, **characterized in that** the distance between the axes of the lateral connection end-pieces (7), arranged in parallel, of two adjacent manifold elements (2) is between two and five times the diameter of the connection end-pieces (7).

14. Manifold according to any one of the preceding claims, **characterized in that** it comprises a complementary manifold element formed by a female stopper (4) having a female end part identical to that of the said elements.

15. Manifold according to any one of the preceding claims, **characterized in that** it comprises a complementary manifold element formed by a male stopper (3) having a male end part identical to that of the said elements.

16. Manifold according to Claim 15, **characterized in that** the said male stopper is provided with a shut-off valve (38) guided axially in the female part, the said elements having a valve seat adapted to supportingly receive the said shut-off valve when the latter is moved axially by rotation of the said male stopper.

17. Manifold according to any one of the preceding claims, **characterized in that** each manifold element has at least one angular indexing notch (45) complementary with at least one angular indexing notch (46) of the other manifold elements.

18. Manifold according to Claim 17, **characterized in that** each manifold element has opposed radial faces having the said angular indexing notches (45, 46).

19. Manifold according to any one of Claims 1 to 14, in which each of the said manifold elements comprises an annular inner shoulder (36) directed towards the said female part and forming a valve seat.

20. Manifold according to Claim 19, in which each of the said elements comprises, in its female part, a means (37) for axially guiding a valve.

21. Manifold according to Claim 20, **characterized in that** the said valve-guiding means is formed by at least one axially extending flat (37).

22. Manifold according to any one of the preceding claims, in which the connection end-pieces (7) are adapted to be engaged in end parts of pipes, these parts being retained on these end-pieces (7) by outer crimping rings which surround them.
